# EUROPÄISCHE PATENTSCHRIFT

(11) **EP 1 770 255 B1**
(45) Veröffentlichungstag und Bekanntmachung des Hinweises auf die Patenterteilung: **02.01.2013**
(21) Anmeldenummer: 06120223.0
(22) Anmeldetag: 06.09.2006
(51) Int. Cl.: F01P 7/04, F01P 5/02, F01P 3/18, F04D 27/02

(54) **Kühlanordnung eines Fahrzeugs**
Cooling device for a vehicle
Dispositif de refroidissement pour un véhicule

(30) Priorität: 22.09.2005 DE 102005045266
(43) Veröffentlichungstag der Anmeldung: 04.04.2007
(73) Patentinhaber: Deere & Company, Moline, IL 61265-8098 (US)
(72) Erfinder: Tarasinski, Dr., Nicolai, 67227, Frankenthal (DE); Gugel, Rainer, 68163, Mannheim (DE); Lang, Mattias, 76698 Ubstadt-Weiher (DE)
(74) Vertreter: Holst, Sönke

(56) Entgegenhaltungen:
- EP-A- 1 496 214
- DE-A- 10 062 534
- DE-A- 10 257 642
- DE-A1- 19 961 825
- US-A- 2 729 203
- US-A- 5 495 909
- US-B1- 6 230 668

## Beschreibung

Die Erfindung betrifft einen Traktor nach dem Oberbegriff des Anspruchs 1.

### Stand der Technik

Kühlsysteme in Fahrzeugen werden eingesetzt, um die Abwärme verschiedener Wärmequellen abzuführen. Diese können z. B. der Verbrennungsmotor, die Ladeluftkühlung, die Klimaanlage, Elektromotoren oder das Getriebe sein. Insbesondere bei der Kühlung von Verbrennungsmotoren, der Ladeluftkühlung, der Getriebeölkühlung und des Klimaanlagenkondensators sind Kreuzstromwärmetauscher Stand der Technik. Bei diesen Wärmetauschern ist eines der beiden Fluide vorwiegend die Umgebungsluft. Die Wärmetauscher sind derart ausgeführt, dass ein Fluid im Inneren des Wärmetauschers strömt (innerer Kreislauf) und das zweite Fluid im Kreuzstrom zu diesem die äußere Oberfläche des Wärmetauschers umströmt (äußerer Kreislauf). Um die Wärme übertragende Fläche des Wärmetauschers zu vergrößern, werden die Wärmetauscher mit Rippen versehen, die zwischen die Rohre für das innere Fluid eingesetzt werden. Um die innere Durchströmung des Wärmetauschers zu gewährleisten, werden abhängig vom inneren Fluid z. B. Kühlmittelpumpen, Kompressoren oder Turbinen eingesetzt. Zur Förderung des äußeren Fluids werden beim Kreuzstromverfahren in Fahrzeugen vorwiegend Lüfter eingesetzt.

Im Stand der Technik sind unterschiedliche Möglichkeiten bekannt, einen oder mehrere Lüfter mit einem oder mehreren Wärmetauschern zu kombinieren:

Die DE 100 39 622 A beschreibt ein Kraftfahrzeug mit einem Wasserkühler und einem Ladeluftkühler, denen jeweils ein elektromotorisch betriebener Lüfter zugeordnet ist. Die beiden Kühlkreise werden demnach unabhängig voneinander mit einem Luftstrom beaufschlagt.

Die DE 41 04 093 A schlägt eine andere Kühlanordnung vor, bei der ein Kondensator einer Klimaanlage in Luftflussrichtung vor einem Wärmetauscher für das Kühlmittel eines Verbrennungsmotors angeordnet ist. Ein Ölkühler und ein Ladeluftkühler sind unter- bzw. oberhalb des Wärmetauschers für das Kühlmittel des Verbrennungsmotors angeordnet. Die Drehzahlen eines oder mehrerer Lüfter zur Beaufschlagung der Wärmetauscher mit Kühlluftströmen werden elektronisch dem jeweiligen Kühlleistungsbedarf entsprechend eingestellt.

Die DE 199 61 825 A beschreibt eine Kühlanordnung, bei der ein Kühler für eine Brennstoffzelle und ein zugehöriger Lüfter sowie ein Kühler für den Kondensator einer Klimaanlage und ein zugehöriger Lüfter vorgesehen sind. Die beiden Teilkreise sind strömungsmechanisch miteinander gekoppelt, um ihre Steuerung zu vereinfachen und einen gemeinsamen Fluidantrieb verwenden zu können.

Die US 5 495 909 A schlägt eine Kühlanordnung vor, bei der ein Kondensator einer Klimaanlage und ein dahinter angeordneter Wärmetauscher eines Verbrennungsmotors mittels zweier, nebeneinander angeordneter Radiallüfter mit einem Luftstrom beaufschlagt werden. Die Radiallüfter stoßen ihre Luftströme zu gegenüberliegenden Seiten des Fahrzeugs aus.

Es ist im Stand der Technik demnach bekannt, mehrere Wärmetauscher bereitzustellen, die jeweils einem Kühlkreislauf zugeordnet sind. Als nachteilig ist dabei anzusehen, dass die Abmessungen und thermischen Eigenschaften der Wärmetauscher zumindest näherungsweise dem maximalen Kühlleistungsbedarf des jeweiligen Kühlkreislaufs anzupassen sind. Das führt zu einer großen Anzahl unterschiedlicher herzustellender und für einen Reparaturfall einzulagernder Typen von Wärmetauschern. Weiterhin beeinflussen sich Wärmetauscher gegenseitig, insbesondere wenn sie in der Strömungsrichtung der Luft hintereinander angeordnet sind, was eine Anpassung der Lüfterdrehzahl an den jeweiligen Kühlleistungsbedarf erschwert.

Die US 6 230 668 A beschreibt ein Kühlsystem für Lokomotiven, das zwei Lüfter umfasst, denen jeweils vier Wärmetauscher für Kühlflüssigkeit des Verbrennungsmotors und einen zweistufigen Ladeluftkühler zugeordnet sind. Die Wärmetauscher der Lüfter sind jeweils in Serie geschaltet. Der zweite Lüfter wird nur in Betrieb gesetzt, wenn ein hinreichend hoher Kühlungsbedarf besteht, ansonsten wird er abgeschaltet oder mit verminderter Drehzahl betrieben. Die Lüfter und Wärmetauscher sind am Dach der Lokomotive angebracht und die Luftströmungsrichtung ist vertikal orientiert.

Die DE 100 62 534 A zeigt eine Arbeitsmaschine mit zwei übereinander angeordneten Radialventilatoren, die Luft von vorn her ansaugen und zur Seite hin abgeben, wo sie jeweils zwei übereinander angeordnete Wärmetauscher durchströmt, bevor sie an die Umgebungsluft abgegeben wird.

In der als gattungsbildend angesehenen EP 1 496 214 wird ein landwirtschaftlicher Traktor beschrieben, bei dem zwei horizontal angeordnete Wärmetauscher hintereinander angeordnet sind, die mittels unterhalb der Wärmetauscher positionierter Lüfter mit einem vertikal nach oben gerichteten Luftstrom beaufschlagt werden.

### Aufgabe der Erfindung

Das der Erfindung zu Grunde liegende Problem wird darin gesehen, eine Kühlanordnung eines Fahrzeugs mit mehreren Wärmetauscher dahingehend zu verbessern, dass es möglich wird, mit Wärmetauschern gegebener physikalischer Eigenschaften unterschiedliche Kühlleistungsbedarfe zu erfüllen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein landwirtschaftlicher Traktor umfasst einen quaderförmigen Haubenbereich, in dem eine Kühlanordnung angeordnet ist. Die Kühlanordnung setzt sich aus einer Wärmequelle, einem ersten Wärmetauscher, einem zweiten Wärmetauscher sowie einem ersten, dem ersten Wärmetauscher zugeordneten Lüfter und einem zweiten, dem zweiten Wärmetauscher zugeordneten Lüfter zusammen. Ein flüssiges bzw. gasförmiges Kühlfluid strömt in einem Kühlkreislauf durch die Wärmequelle und durch die beiden Wärmetauscher, die bezüglich des Kühlfluidstroms parallel oder in Serie geschaltet sein können. Die Lüfter sind bezüglich einer Vorwärtsrichtung des Traktors rückwärtig der Wärmetauscher positioniert und beaufschlagen jeweils den ihnen zugeordneten Wärmetauscher mit getrennten Luftströmen. Zumindest der zweite Lüfter, vorzugsweise aber auch der erste Lüfter, weist eine vom Kühlleistungsbedarf des Kühlkreislaufs abhängige Drehzahl auf. Dazu kann eine Steuerung vorgesehen sein, die seine Drehzahl stufenlos oder in mindestens zwei (Lüfter ein bzw. ausgeschaltet) Stufen abhängig von dem mittels geeigneter Sensoren erfassten Kühlleistungsbedarf festlegt (steuert oder regelt). Als Lüfter werden Radiallüfter verwendet, die die Luft durch die zugehörigen Wärmetauscher hindurch saugen und in einem etwa rechten Winkel zur Anströmrichtung wieder abgeben. Die Abgaberichtung ist bezüglich der Fahrtrichtung des Fahrzeugs zur Seite und/oder nach oben gerichtet. Die Wärmetauscher und Lüfter sind an der Vorderseite des Fahrzeugs angeordnet, so dass sie zusätzlich mit eventuell vorhandenem Fahrtwind beaufschlagt werden.

Bei einer bevorzugten Ausführungsform ist bezüglich des Luftstroms stromauf oder stromab des ersten Wärmetauschers ein dritter Wärmetauscher angeordnet. Ein vierter Wärmetauscher kann bezüglich des Luftstroms stromauf oder stromab des zweiten Wärmetauschers positioniert sein. Der dritte bzw. vierte Wärmetauscher kann in den Kühlkreislauf des ersten und zweiten Wärmetauschers eingefügt oder einzeln oder gemeinsam separaten (vom ersten und zweiten Wärmetauscher getrennten) Kühlkreisläufen zugeordnet werden.

Die Lüfter und zugehörigen Wärmetauscher können seitlich nebeneinander oder übereinander angeordnet werden. Sind vier Wärmetauscher und Lüfter vorhanden, können jeweils zwei von ihnen übereinander und zwei nebeneinander angeordnet sein.

### Ausführungsbeispiel

In der Zeichnung ist ein nachfolgend näher beschriebenes Ausführungsbeispiel der Erfindung dargestellt. Sie zeigt eine perspektivische Ansicht einer erfindungsgemäßen Kühlanordnung mit zwecks besserer Erkennbarkeit abgenommenen Leiteinrichtungen der Lüfter.

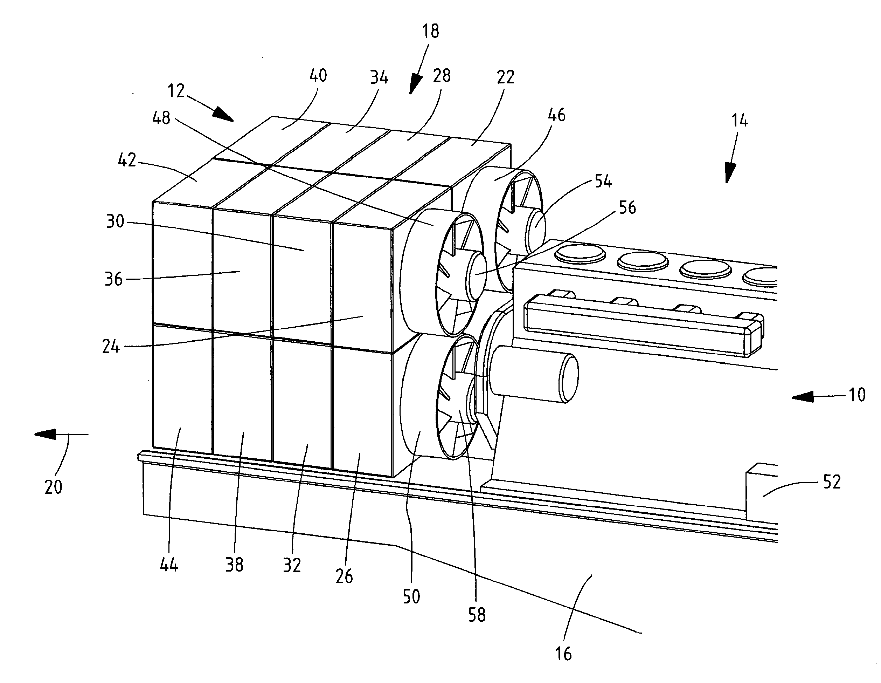

Die Figur 1 zeigt den vorderen Bereich eines Fahrzeugs 10 in Form eines landwirtschaftlichen Traktors, der einen quaderförmigen Haubenbereich 12 umfasst, der durch eine Haube (nicht gezeigt) nach oben, vorn und zu den Seiten abgeschlossen werden kann. Rückwärtig des Haubenbereichs 12 befindet sich ein Verbrennungsmotor 14. Der Verbrennungsmotor 14 wird durch einen Rahmen 16 des Fahrzeugs 10 abgestützt, der auch eine erfindungsgemäße Kühlanordnung 18 trägt. Das Fahrzeug 10 wird im Betrieb in einer Vorwärtsrichtung 20 bewegt, kann aber wahlweise auch rückwärts (in einer entgegen der Vorwärtsrichtung 20 gerichteten Fahrtrichtung) bewegt werden.

Die Kühlanordnung 18 umfasst insgesamt sechzehn als an sich bekannte Kreuzstromwärmetauscher ausgeführte Wärmetauscher 22 bis 44, von denen nur zwölf in der Figur sichtbar sind und die im dargestellten Beispiel jeweils etwa übereinstimmende, quaderförmige Abmessungen aufweisen. Es sind jeweils vier der Wärmetauscher 22 bis 44 in Fahrtrichtung 20 hintereinander angeordnet, wobei jeweils zwei nebeneinander angeordnete, obere Reihen gebildet sind, die sich oberhalb zweier nebeneinander angeordneter, unterer Reihen befinden.

Bezüglich der Fahrtrichtung 20 hinter den vier Reihen der Wärmetauscher 22 bis 44 befinden sich vier jeweils einer Reihe zugeordnete Lüfter 46, 48, 50, von denen der vierte (rechts unten angeordnete) nicht erkennbar ist. Die Lüfter 46, 48, 50 sind Radiallüfter, die Luft durch die ihnen zugeordneten Wärmetauscher 22 bis 44 saugen und im rechten Winkel wieder abgeben. Der untere linke Lüfter 50 gibt seine Luft zur linken Seite ab, während der obere linke Lüfter 48 seine Luft nach oben abgibt, wie auch der obere rechte Lüfter 46. Der nicht sichtbare, untere rechte Lüfter gibt seine Luft wiederum zur rechten Seite ab. Dadurch vermeidet man unerwünschte Rezirkulationseffekte. Im Betrieb sind die Lüfter 46, 48, 50 mit geeigneten, an sich bekannten Leiteinrichtungen umgeben (s. US 5 495 909 A), die in der Figur aus Gründen der Übersichtlichkeit nicht gezeigt werden.

Die hinteren drei Wärmetauscher 22, 28, 34 der oberen rechten Reihe, der hintere Wärmetauscher 24 der oberen linken Reihe sowie die hinteren beiden Wärmetauscher 26, 34 der unteren linken Reihe werden im dargestellten Beispiel von Kühlflüssigkeit des Verbrennungsmotors 14 durchströmt. Der vorletzte Wärmetauscher 30 der oberen linken Reihe und der drittletzte Wärmetauscher 38 der unteren linken Reihe werden von Hydrauliköl durchströmt, dienen demnach als Ölkühler. Die verbleibenden Wärmetauscher 36, 40, 42 und 44 sind hingegen Ladeluftkühler eines Turboladers des Verbrennungsmotors 14. Die nicht sichtbaren Wärmetauscher der unteren rechten Reihe können beliebige Aufgaben haben, so können die hinteren drei Wärmetauscher dieser Reihe auch von Kühlflüssigkeit des Verbrennungsmotors 14 durchströmt werden, während der vorderste Wärmetauscher ein Kondensator einer Klimaanlage sein kann.

Die Wärmetauscher 40, 42, 44 mit den geringsten Temperaturniveaus sind jeweils in Fahrtrichtung 20 am weitesten vorn angeordnet, um eine maximale Temperaturdifferenz zwischen Kühlluft und Kühlfluid zu erreichen. Dadurch wird eine Art Gegenstromprinzip durch eine Kombination von Kühlkreisläufen auf verschiedenen Temperaturniveaus erzielt. Die Kühlkreisläufe können je nach Bedarf beliebig kombiniert oder konfiguriert werden, z. B. durch Weglassen oder Hinzufügen von Wärmetauschern.

Die jeweils einer Wärmequelle (wie Verbrennungsmotor 14, Turbolader, Hydraulikkreis, Klimaanlage etc.) zugeordneten Wärmetauscher 22 bis 44 sind bezüglich des Kühlfluidstroms in Reihe oder parallel oder in einer beliebigen, gemischten Konfiguration geschaltet. Es können Pumpen, Kompressoren oder Turbinen verwendet werden, um die Kühlfluide in ihren Kühlkreisläufen zirkulieren zu lassen, und es ist eine Verwendung von Ventilen denkbar, die die Kühlfluide nur jeweils in ausgewählte der ihren Kühlkreisläufen zugeordneten Wärmetauscher fließen lassen.

Die Lüfter 46, 48, 50 werden durch Elektromotoren 54, 56, 58 angetrieben, die mittels einer Steuerung 52 angesteuert werden. Die Steuerung 52 erfasst durch Sensoren (nicht gezeigt) die jeweiligen Temperaturen in den Kühlkreisläufen und die Umgebungstemperatur und kontrolliert (steuert oder regelt) die Drehzahlen der vier Lüfter 46, 48, 50 unabhängig voneinander. Sie kann auch die Pumpen, Kompressoren oder Turbinen zur Förderung der Kühlfluide in den Kühlkreisläufen ansteuern, wie auch die zuvor erwähnten Ventile. Die Steuerung 52 kontrolliert die Drehzahlen der Motoren 54, 56, 58 und ggf. der Pumpen, Kompressoren oder Turbinen und/oder Ventile zur Förderung der Kühlfluide in den Kühlkreisläufen derart, dass eine möglichst geringe (energiesparende) Drehzahl verwendet, aber die erzielte Kühlleistung jedoch dem Kühlleistungsbedarf gerecht wird.

Die in Fahrtrichtung 20 rechte obere Reihe der Wärmetauscher 22, 28, 34, 40 ist im dargestellten Beispiel hochtemperaturlastig, während die in Fahrtrichtung 20 untere linke Reihe der Wärmetauscher 26, 32, 38, 44 niedertemperaturlastig ist. Die untere linke Reihe mit dem Lüfter 50 wird demnach nur benötigt, wenn ein über eine Grundlast hinausgehender höherer Kühlleistungsbedarf vorliegt. Anderenfalls wird der Lüfter 50 ausgeschaltet oder mit einer gegenüber seiner maximalen bzw. nominalen Drehzahl verminderten Drehzahl betrieben.

Die Wärmetauscher 22, 28, 34 können als erste Wärmetauscher bezeichnet werden, während die Wärmetauscher 26 und 32 als zweite Wärmetauscher bezeichnet werden können. Eine erste Wärmequelle ist dann der Verbrennungsmotor 14. Als dritte und vierte Wärmetauscher können alle übrigen Wärmetauscher bezeichnet werden.

## Patentansprüche

1. Landwirtschaftlicher Traktor mit einem etwa quaderförmigen Haubenbereich (12), unterhalb dessen eine Kühlanordnung (18) angeordnet ist, die eine Wärmequelle, einen ersten Wärmetauscher (22, 28, 34), einen zweiten Wärmetauscher (26, 32), einen ersten Lüfter (46) zur Beaufschlagung des ersten Wärmetauschers (22, 28, 34) mit einem ersten Luftstrom, und einen zweiten Lüfter (50) zur Beaufschlagung des zweiten Wärmetauschers (26, 32) mit einem zweiten Luftstrom umfasst, und wobei der erste Wärmetauscher (22, 28, 34) und der zweite Wärmetauscher (26, 32) mit der Wärmequelle in einem gemeinsamen Kühlkreislauf angeordnet sind, wobei zumindest der zweite Lüfter (50) eine in Abhängigkeit vom Kühlleistungsbedarf des Kühlkreislaufs änderbare Drehzahl aufweist, und wobei die Lüfter (46, 48, 50) Radiallüfter sind, die bezüglich einer Vorwärtsrichtung des Traktors rückwärtig der Wärmetauscher (22, 26, 28, 32, 34) angeordnet sind und Luft durch die Wärmetauscher (22-44) saugen und bezüglich der Fahrtrichtung (20) des Fahrzeugs (10) in jeweils unterschiedlichen, seitlichen und/oder vertikalen Richtungen ausstoßen.

2. Traktor nach Anspruch 1, **dadurch gekennzeichnet, dass** ein dritter Wärmetauscher bezüglich des Luftstroms stromauf oder stromab des ersten Wärmetauschers (22, 28, 34) angeordnet ist.

3. Traktor nach Anspruch 2, **dadurch gekennzeichnet, dass** der dritte Wärmetauscher in einem gemeinsamen Kühlkreislauf mit der Wärmequelle oder in einem von der Wärmequelle und dem ersten und zweiten Wärmetauscher (22, 26, 28, 32, 34) getrennten Kühlkreislauf angeordnet ist.

4. Traktor nach Anspruch 2 oder 3, **dadurch gekennzeichnet, dass** ein vierter Wärmetauscher bezüglich des Luftstroms stromauf oder stromab des zweiten Wärmetauschers (26, 32) angeordnet ist und dass der vierte Wärmetauscher in einem gemeinsamen Kühlkreislauf mit der Wärmequelle oder in einem von der Wärmequelle und dem ersten, zweiten und dritten Wärmetauscher (22, 26, 28, 32, 34) getrennten Kühlkreislauf oder mit dem dritten Wärmetauscher gemeinsamen Kühlkreislauf angeordnet ist.

5. Traktor nach einem der Ansprüche 1 bis 4, **dadurch gekennzeichnet, dass** die ersten und zweiten Wärmetauscher (22, 26, 28, 32, 34) und Lüfter (46, 48, 50) seitlich nebeneinander angeordnet sind.

6. Traktor nach einem der Ansprüche 1 bis 5, **dadurch gekennzeichnet, dass** die ersten und zweiten Wärmetauscher (22, 26, 28, 32, 34) und Lüfter (46, 48, 50) vertikal übereinander angeordnet sind.

7. Traktor nach einem der Ansprüche 1 bis 6, **dadurch gekennzeichnet, dass** der zweite Lüfter (50) abgeschaltet ist, solange kein über eine Grundlast hinausgehender höherer Kühlleistungsbedarf vorliegt.

## Claims

1. Agricultural tractor with an approximately cuboidal hood region (12), below which a cooling arrangement (18) is arranged, the cooling arrangement comprising a heat source, a first heat exchanger (22, 28, 34), a second heat exchanger (26, 32), a first fan (46) for acting upon the first heat exchanger (22, 28, 34) with a first air flow, and a second fan (50) for acting upon the second heat exchanger (26, 32) with a second air flow, and wherein the first heat exchanger (22, 28, 34) and the second heat exchanger (26, 32) are arranged with the heat source in a common cooling circuit, wherein at least the second fan (50) has a rotational speed which is changeable depending on the cooling power requirement of the cooling circuit, and wherein the fans (46, 48, 50) are radial fans which are arranged at the rear of the heat exchangers (22, 26, 28, 32, 34) with respect to a forward direction of the tractor and suck air through the heat exchangers (22-44) and eject the air in in each case different lateral and/or vertical directions with respect to the direction of travel (20) of the vehicle (10).

2. Tractor according to Claim 1, **characterized in that** a third heat exchanger is arranged upstream or downstream of the first heat exchanger (22, 28, 34) with respect to the air stream.

3. Tractor according to Claim 2, **characterized in that** the third heat exchanger is arranged in a common cooling circuit with the heat source or in a cooling circuit separate from the heat source and the first and second heat exchangers (22, 26, 28, 32, 34).

4. Tractor according to Claim 2 or 3, **characterized in that** a fourth heat exchanger is arranged upstream or downstream of the second heat exchanger (26, 32) with respect to the air flow, and **in that** the fourth heat exchanger is arranged in a common cooling circuit with the heat source or in a cooling circuit separate from the heat source and the first, second and third heat exchangers (22, 26, 28, 32, 34) or in a common cooling circuit with the third heat exchanger.

5. Tractor according to one of Claims 1 to 4, **characterized in that** the first and second heat exchangers (22, 26, 28, 32, 34) and fans (46, 48, 50) are arranged laterally next to one another.

6. Tractor according to one of Claims 1 to 5, **characterized in that** the first and second heat exchangers (22, 26, 28, 32, 34) and fans (46, 48, 50) are arranged vertically one above another.

7. Tractor according to one of Claims 1 to 6, **characterized in that** the second fan (50) is switched off if there is not greater cooling power requirement going beyond a base load.

## Revendications

1. Tracteur agricole comprenant une région de capot (12) de forme approximativement parallélépipédique, sous laquelle est disposé un agencement de refroidissement (18), qui comprend une source de chaleur, un premier échangeur de chaleur (22, 28, 34), un deuxième échangeur de chaleur (26, 32), un premier ventilateur (46) pour solliciter le premier échangeur de chaleur (22, 28, 34) avec un premier courant d'air, et un deuxième ventilateur (50) pour solliciter le deuxième échangeur de chaleur (26, 32) avec un deuxième courant d'air, et dans lequel le premier échangeur de chaleur (22, 28, 34) et le deuxième échangeur de chaleur (26, 32) sont disposés avec la source de chaleur dans un circuit de refroidissement commun, dans lequel au moins le deuxième ventilateur (50) présente une vitesse de rotation variable en fonction des besoins en puissance de refroidissement du circuit de refroidissement, et dans lequel les ventilateurs (46, 48, 50) sont des ventilateurs radiaux qui sont disposés, par rapport à une direction d'avance du tracteur, vers l'arrière des échangeurs de chaleur (22, 26, 28, 32, 34) et aspirent de l'air à travers les échangeurs de chaleur (22-44) et l'éjectent par rapport à la direction de conduite (20) du véhicule (10) dans des directions respectives différentes latérales et/ou verticales.

2. Tracteur selon la revendication 1, **caractérisé en ce qu'**un troisième échangeur de chaleur est disposé par rapport au courant d'air en amont ou en aval du premier échangeur de chaleur (22, 28, 34).

3. Tracteur selon la revendication 2, **caractérisé en ce que** le troisième échangeur de chaleur est disposé dans un circuit de refroidissement commun avec la source de chaleur ou dans un circuit de refroidissement séparé de la source de chaleur et du premier et du deuxième échangeur de chaleur (22, 26, 28, 32, 34).

4. Tracteur selon la revendication 2 ou 3, **caractérisé en ce qu'**un quatrième échangeur de chaleur est disposé par rapport au courant d'air en amont ou en aval du deuxième échangeur de chaleur (26, 32) et **en ce que** le quatrième échangeur de chaleur est disposé dans un circuit de refroidissement commun avec la source de chaleur ou dans un circuit de refroidissement séparé de la source de chaleur et du premier, deuxième et troisième échangeurs de chaleur (22, 26, 28, 32, 34) ou dans un circuit de refroidissement commun au troisième échangeur de chaleur.

5. Tracteur selon l'une quelconque des revendications 1 à 4, **caractérisé en ce que** les premiers et deuxièmes échangeurs de chaleur (22, 26, 28, 32, 34) et les ventilateurs (46, 48, 50) sont disposés latéralement les uns à côté des autres.

6. Tracteur selon l'une quelconque des revendications 1 à 5, **caractérisé en ce que** les premiers et deuxièmes échangeurs de chaleur (22, 26, 28, 32, 34) et les ventilateurs (46, 48, 50) sont disposés latéralement les uns à côté des autres.

7. Tracteur selon l'une quelconque des revendications 1 à 6, **caractérisé en ce que** le deuxième ventilateur (50) est déconnecté tant qu'il n'y a aucun besoin de puissance de refroidissement supérieur au-delà d'une charge de base.
